# EUROPÄISCHE PATENTSCHRIFT

(11) **EP 0 648 193 B1**
(45) Veröffentlichungstag und Bekanntmachung des Hinweises auf die Patenterteilung: **04.02.1998**
(21) Anmeldenummer: 93915772.3
(22) Anmeldetag: 02.07.1993
(51) Int. Cl.: C02F 9/00, B60S 3/00

(54) **ANORDNUNG UND VERFAHREN ZUM REINIGEN VON ABWASSER**
PROCESS AND SYSTEM FOR PURIFYING WASTE WATER
PROCEDE ET SYSTEME DE PURIFICATION D'EAUX USEES

(30) Priorität: 03.07.1992 DE 9208900 U; 23.09.1992 DE 4231880; 08.03.1993 DE 4307046
(43) Veröffentlichungstag der Anmeldung: 19.04.1995
(73) Patentinhaber: BL Patentverwaltungs-und Vertriebs GmbH, 61118 Bad Vilbel (DE)
(72) Erfinder: KLÖSS, Harald, D-6368 Bad Vilbel (DE); CREMA, Erhard, D-6457 Maintal (DE)
(74) Vertreter: Stoffregen, Hans-Herbert, Dr. Dipl.-Phys.
(86) Internationale Anmeldenummer: EP9301707
(87) Internationale Veröffentlichungsnummer: WO9401368

(56) Entgegenhaltungen:
- EP-A- 0 436 090
- DE-A- 4 040 007

## Beschreibung

Die Erfindung bezieht sich auf ein Verfahren und eine Anordnung zum Reinigen von Abwasser aus Kraftfahrzeug-Waschanlagen gemäß Oberbegriff der Ansprüche 1 und 4.

Um das bei Kraftfahrzeugwaschanlagen anfallende und mit Waschmitteln und Öl oder anderen Rückständen verunreinigte Abwasser zu entsorgen, wird dieses in Schlammauffangbecken angesammelt, um sodann über einen Ölabscheider einem Kanal zugeführt zu werden. Überprüfungen des an die Kanalisation abgeführten Abwassers zeigen jedoch, daß der Grad der Reinigung häufig nicht den Vorschriften genügt. Auch ist ein unerwünscht hoher Wasserverbrauch gegeben, da das benutzte Wasser grundsätzlich nicht wiederverwendet wird.

Aus der DE 40 40 007 A1 ist eine Selbstbedienungs-Autowaschanlage bekannt, bei der anfallendes Abwasser sowohl mittels mechanischer Einrichtungen als auch chemischer Mittel Wie Flockungsmittel gereinigt wird. Das zu reinigende Abwasser durchströmt dabei recht voluminöse Becken.

Ein Verfahren zur Reinigung von Abwasser von Auto-Waschanlagen ist aus der EP 0 436 090 A1 bekannt, bei der gereinigtes Wasser mit reinigungsaktiven Substanzen wie Flockungsmitteln und Luft vermischt wird.

Der vorliegenden Erfindung liegt die Aufgabe zugrunde, eine Anordnung der eingangs beschriebenen Art bzw. ein Verfahren so weiterzubilden, daß eine Abwasserreinigung im hinreichenden Umfang erfolgt, ohne daß einerseits übliche Schlammauffangbecken und andererseits aufwendige Kläreinrichtungen erforderlich sind. Auch soll ein kompakter Aufbau und ein problemloser Betrieb möglich sein, so daß eine Installation auch in vorhandenen Waschanlagen möglich ist.

Die Aufgabe wird anordnungsmäßig erfindungsgemäß im wesentlichen durch die den nebengeordneten Ansprüchen 1 und 4 zu entnehmenden Maßnahmen gelöst. Ausgestaltungen ergeben sich aus den Unteransprüchen. Erfindungsgemäß wird das zu reinigende Abwasser durch die Anordnung mit einer Wasserstrahlpumpe gefördert, dessen Wasservorlage gereinigtes bzw. vorgereinigtes Abwasser oder zumindest vorgereinigtes Abwasser ist.

Durch den von der Wasserstrahlpumpe erzeugten Unterdruck wird das in dem ersten Behälter angesammelte Abwasser, das von einer Waschanlage stammt, in den dritten Behälter hineingesaugt, der seinerseits selbstätig entleerbar ist. Hierzu kann der Behälter bodenseitig durch ein als mit einem Gegengewicht versehener Deckel ausgebildetes Verschlußelement verschließbar sein, welches sich nach Erreichen einer bestimmten Füllmenge bzw. eines Füllsstandes aufgrund des herrschenden hydrostatischen Druck selbstätig öffnet und nach Entleeren - durch das Gegengewicht hervorgerufen - den Behälter selbständig schließt, wobei während des Entleerens Falschluft angesaugt wird. Es kann folglich eine Konstrucktion gewählt werden, die der DE 30 32 503 C2 zu entnehmen ist. Das Ansaugen des Abwassers kann derart gesteuert erfolgen, daß das angesaugte Wasser z. B. zunächst zwei Minuten beruhigt wird, bevor es über einen Zeitraum von vorzugsweise 15 Sekunden abgelassen wird.

In dem dem dritten Behälter nachgeordnetem Abscheider erfolgt ein Trennen von Schlamm, Öl und Wasser, wobei das Öl über einen Ölabscheider abgetrennt und der Schlamm bodenseitig von einem Schlammfang abgesaugt und einem Schlammbehälter zuführbar ist. Die Förderung des Schlammes erfolgt dabei gleichfalls über den von der Wasserstrahlpumpe erzeugten Unterdruck.

Um den Schlamm zu reinigen, wird dieser mit gereinigtem Wasser gespült, welches einem Auffangbehälter entnehmbar ist, der unterhalb eines Überlauf des zweiten Behälters angeordnet ist. Das in dem Schlammbehälter angesammelte Wasser zum Reinigen des Schlammes wird seinerseits über den Unterdruck in den sich selbstätig entleerenden dritten Behälter gesaugt.

Um den Schlamm deponiefähig zu machen, wird der Schlammbehälter nach dem Entfernen des Wassers evakuiert, wobei gleichzeitig eine Heizung angeschaltet werden kann, um den Schlamm auf eine Temperatur von 30 - 40 °C zu erwärmen, wodurch eine Restwasserverdampfung erfolgt. Der so gereinigte und getrocknete Schlamm ist sodann deponiefähig.

Das Evakuieren des Schlammbehälters erfolgt gleichfalls mittels des von der Wasserstrahlpumpe erzeugten Unterdrucks.

Alternativ besteht die Möglichkeit, den in dem Schlammbehälter angesammelten Schlamm ohne weiteren Spülvorgang nur zu trocknen, indem in dem Schlammbehälter ein Unterdruck aufgebaut wird, der von der Wasserstrahlpumpe erzeugbar ist.

Es besteht auch die Möglichkeit, den Schlamm in einer dem dritten Behälter vorgeordneten Vorfilterstufe anzusammeln. Diese Vorfilterstufe besteht dabei vorzugsweise aus einem zylindrischen Behälter, in dem koaxial zu diesem ein umlaufendes Filter angeordnet ist, das von innen nach außen von über den von der Wasserstrahlpumpe erzeugten Unterdruck angesaugtem Abwasser durchströmt wird. Sodann strömt das durch das Filter vorgereinigte Abwasser in den dritten Behälter.

In der Vorfilterstufe wird durch das Filter zurückgehaltener Schlamm gesammelt, der über den Boden des Behälters abgelassen werden kann. Auch bei diesem Vorschlag kann der in der Vorfilterstufe angesammelte Schlamm durch Ausbilden eines Unterdruckes getrocknet werden, indem die Verbindungsleitung zwischen dem Abwassersammelbehälter und der Vorfilterstufe abgesperrt wird.

Der Abscheider selbst ist vorzugsweise mehrstufig ausgebildet, wobei erwähntermaßen eine erste vorzugsweise unmittelbar unterhalb des sich selbsttätig entleerenden dritten Behälters angeordnete Stufe als Ölabscheider und die der Nachreinigungseinrichtung vorgeschaltete Stufe als Filterstufe ausgebildet ist. Hierzu kann die Filterstufe ein Feinfilter aufweisen.

Die einzelnen Stufen sind durch Trennwände unterteilt, die entweder vom Bodenbereich ausgehen, um beabstandet zum Flüssigkeitsspiegel zu enden, oder aber den Flüssigkeitsspiegel durchsetzen und im Abstand zum Boden enden. Hierdurch bedingt fließt von der letzten Stufe -der Filterstufe- hinreichend gereinigtes Wasser ab, welches die vorzugsweise biologisch arbeitende Nachreinigungseinrichtung durchströmt, um in den zweiten Behälter zu fließen, in dem die Wasserstrahlpumpe angeordnet ist.

Durch die erfindungsgemäße Lehre sind übliche Schlammfänge nicht mehr erforderlich. Bei bereits installierten Waschanlagen können in den Schlammfängen z.B. Kunststoffbehälter eingebaut werden, die die Funktion des das Schmutzwasser aufnehmenden ersten Behälters ausüben.

In Ausgestaltung der Erfindung kann ein Teil des gereinigten Wassers entkeimt werden, um dieses anschließend z.B. dem Schlammbehälter, dem Abscheider oder der Nachreinigungsstufe zuzuführen. Auch kann ein Teil in den Auffangbehälter zurückgeführt werden, von dem seinerseits Brauchwasser zum Reinigen von z.B. Kraftfahrzeugen entnommen werden kann.

Schließlich kann die Saugseite der Strahlpumpe mit einer Leitung wie Schlauch verbunden sein, um z.B. Waschboxen von Waschanlagen absaugen zu können.

Weitere Einzelheiten, Vorteile und Merkmale der Erfindung ergeben sich nicht nur aus den Ansprüchen, den diesen zu entnehmenden Merkmalen -für sich/oder in Kombination-, sondern auch aus der nachfolgenden Beschreibung eines der Zeichnung zu entnehmenden bevorzugten Ausführungsbeispiels.

Es zeigen:
- Fig. 1: eine Prinzipdarstellung einer ersten Ausführungsform einer Anordnung zum Reinigen von Abwasser,
- Fig. 2: eine Prinzipdarstellung einer zweiten Ausführungsform einer Anordnung zum Reinigen von Abwasser,
- Fig. 3: ein Funktionsschema,
- Fig. 4: eine Prinzipdarstellung einer dritten Ausführungsform einer Anordnung zum Reinigen von Abwasser und
- Fig. 5: eine Prinzipdarstellung einer vierten Ausführungsform einer Anordnung zum Reinigen von Abwasser.

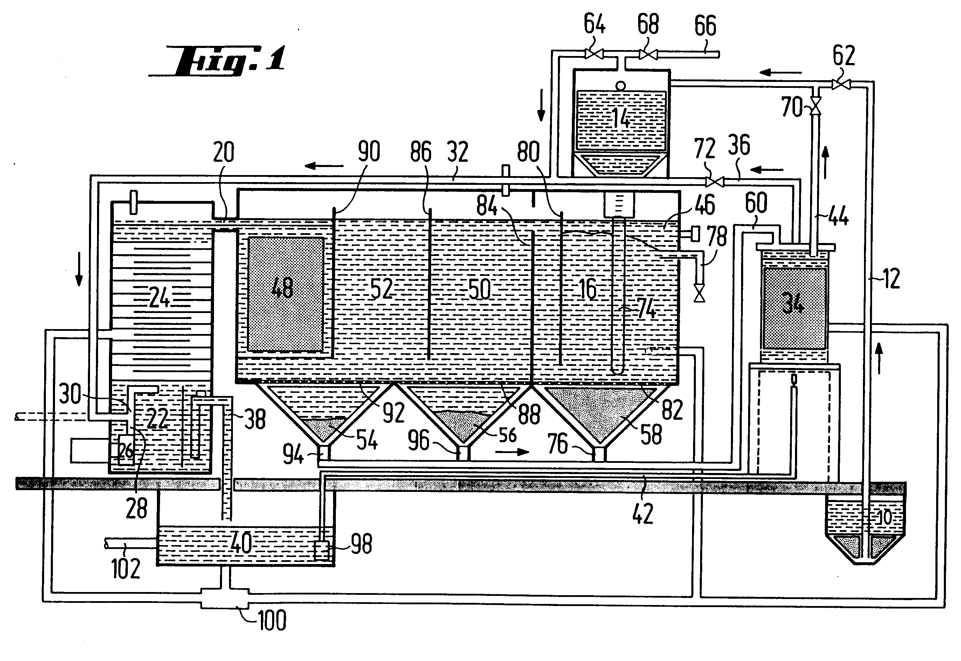

In Fig. 1 ist rein schematisch eine Anordnung zum Reinigen von Abwasser, insbesondere von in PKW-Waschanlagen anfallendem Abwasser dargestellt.

Die Anordnung umfaßt einen das Abwasser sammelnden ersten Behälter (10), der über eine Leitung (12) mit einem Sammelbehälter (14) verbunden ist. Unterhalb des Sammelbehälters (14) befindet sich ein Abscheider (16), der aus mehreren Abscheiderstufen (46), (48), (50) und (52) besteht. Dabei wirkt die unmittelbar unter dem Sammelbehälter (14) angeordnete Stufe (16) als Ölabscheider und die letzte der Stufen (48) als Feinfilterstufe.

Dem Abscheider (16) ist eine Nachreinigungseinrichtung (24) wie Mikro-/Feinfiltrations- und/oder Entkeimungsstufe nachgeordnet, die in einen als zweiten Behälter bezeichneten und gereinigtes Abwasser aufnehmenden Behälter (22) übergeht.

In dem Behälter (22) ist eine Wasserstrahlpumpe (28) angeordnet, durch die das in dem Behälter (22) vorhandene Wasser mittels einer Tauchpumpe (26) im Kreislauf gefördert wird.

Die Saugseite (30) der Wasserstrahlpumpe (28) ist über eine Leitung (32) mit dem Sammelbehälter (14) verbunden. Von der Leitung (32) zweigt eine Leitung (36) ab, die im Kopfbereich eines Schlammbehälters (34) mündet.

Von dem gereinigtes Abwasser sammelnden Behälter (22) geht ein Überlaufrohr (38) aus, das in einem Reinwassersammelbehältnis (40) mündet, von dem eine Leitung (42) in den Bodenbereich des Schlammbehälters (34) führt.

Von dem Schlammbehälter (34) geht des weiteren eine Leitung (44) aus, die in die Leitung (12) übergeht, die ihrerseits in dem Sammelbehälter (14) mündet.

Um den Schlammbehälter (34) mit Schlamm zu befüllen, weist der Abscheider (16) Schlammfänge (54), (56) und (58) auf, die über eine Leitung (60) kopfseitig im Schlammbehälter (34) endet.

Der Funktionsablauf der erfindungsgemäßen Vorrichtung ist wie folgt:

Das in dem Behälter (10) angesammelte Abwasser wird über die Ansaugleitung (12) vom Bodenbereich des Behälters (10) in den Behälter (14) gesaugt. Hierzu wird der Behälter (14) über die Leitung (32) mit der Saugseite (30) der Wasserstrahlpumpe (22) verbunden und gleichzeitig ist ein in der Leitung (12) vorhandenes Ventil (62) und ein in der Leitung (32) vor dem Behälter (14) vorhandenes Ventil (64) geöffnet. Ein den Behälter (14) mit der Umgebung verbindender Leitungsabschnitt (66) ist über ein Ventil (68) geschlossen. Geschlossen sind ferner ein Ventil (70) in der zu dem Schlammbehälter (34) führenden Leitung (44) und ein Ventil (72) in der von der Leitung (32) ausgehenden und zum Schlammbehälter (34) führenden Leitung (36).

Nachdem der Behälter (14) im erforderlichen Umfang gefüllt ist, öffnet sich dieser selbsttätig, und zwar nach einer Lehre, die der DE 30 32 503 C2 zu entnehmen ist. Gleichzeitig ist das Ventil (64) geschlossen und das Ventil (68) geöffnet.

Über einen Auslaß (Leitung (74)) fließt das Abwasser von dem Behälter (14) in die erste Stufe (46) des Abscheiders (16). Die Leitung (74) endet oberhalb eines Lochbleches (82), unterhalb dessen sich ein Schlammfang (58) befindet, der bodenseitig über ein Ventil (76) verschlossen ist, welches eine Verbindung mit der Leitung (60) herstellen kann.

Die erste Stufe (46) ist als Ölabscheider ausgebildet, d.h., daß sich an der Wasseroberfläche Öl ansammeln und über einen Überlauf (78) abfließen kann.

Eine Trennwand (80) erstreckt sich in der ersten Stufe (46) von oberhalb des Wasser- bzw. Ölspiegels bis hin beabstandet zum Bodenbereich der Stufe (46), also dem Lochblech (82). Hierdurch kann Flüssigkeit aus der Stufe (46) in die nachfolgenden Stufen (50), (52) und (48) strömen.

Die Stufe (46) ist von der Stufe (50) durch eine Trennwand (84) getrennt, die eine Durchbrechung im Bereich des Wasserspiegels aufweist. Die Stufen (50) und (52) sind durch eine Trennwand (86) unterteilt, die beabstandet zu einem Lochblech (88), der den Schlammfang (56) abdeckt, endet und die Wasseroberfläche durchsetzt.

Eine entsprechende Trennwand (90) unterteilt die Stufen (48) und (52), unterhalb derer gleichfalls ein den Schlammfang (54) abdeckendes Lochblech (92) vorgesehen ist.

Wie der Schlammfang (58) sind auch die Schlammfänge (54) und (56) jeweils über ein Ventil (94) bzw. (96) gegenüber der Leitung (60) verschließbar, über die dann, wenn Abwasser nicht anfällt, also die Waschanlage außer Betrieb ist, Schlamm in den Schlammbehälter (34) gesaugt wird. In diesem Fall sind die Ventile (76), (94) und (96) geöffnet, die Ventile (62), (64) und (70) geschlossen und das in der Leitung (36) liegende Ventil (72) geöffnet.

Nachdem der Schlammbehälter (34) mit Schlamm gefüllt ist, werden die Ventile (76), (94) und (96) geschlossen. Auch die Ventile (70) und (64) sperren. Sodann kann über die Leitung (42) gereinigtes Abwasser in den Schlammbehälter (34) vom Boden her gefördert werden, wobei die Förderung entweder durch eine in dem Auffangbehälter (40) angeordnete Tauchpumpe (98) oder über die Leitungen (32) und (36) bei geöffnetem Ventil (72) erfolgt, die von der Saugseite (30) der Wasserstrahlpumpe (22) ausgeht.

Nachdem das Wasser, das als Waschwasser wirkt, in den Schlammbehälter (34) eingebracht ist, wodurch Waschmittel, Öl und ähnliches aus dem Schlamm gelöst werden, wird das nunmehr verschmutzte Waschwasser über die Leitung (44) abgesaugt. Hierzu sind die Ventile (62), (68) und (72) geschlossen und die Ventile (64) und (70) geöffnet. Das Waschwasser gelangt folglich in den Sammelbehälter (14).

Sofern das Wasser aus dem Auffangbehälter (40) mittels der Wasserstrahlpumpe (22) angesaugt wird, findet sich in der Leitung (60) ein weiteres nicht dargestelltes Ventil, welches beim Absaugen des Schlammbehälters (34) geschlossen ist.

Nachdem das Waschwasser aus dem Schlammbehälter (34) entfernt ist, erfolgt eine Evakuierung bei geschlossenen Ventilen (64) und (70) und geöffnetem Ventil (72) und gleichzeitig wird eine nicht dargestellte Heizung in Betrieb genommen, um den Sand zu trocknen und das Restwasser verdampfen zu lassen. Der sodann getrocknete und gereinigte Schlamm kann problemlos entsorgt werden.

Von dem Auffangbehälter (40) kann ein Teil des Wassers einer Entkeimungseinrichtung (100) zugeführt werden, von der wiederum entkeimtes Wasser dem Schlammbehälter (34) und/oder der Nachreinigungsstufe (24) und/oder dem Abscheider (16) zugeleitet werden kann. Auch kann ein Teil in den Auffangbehälter (40) zurückgeführt werden, insbesondere dann, wenn dem Auffangbehälter (40) Brauchwasser entnommen wird.

Schließlich kann die Saugseite (30) der Strahlpumpe (28) über eine Leitung (102) mit z.B. Waschboxen einer Waschanlage verbunden sein.

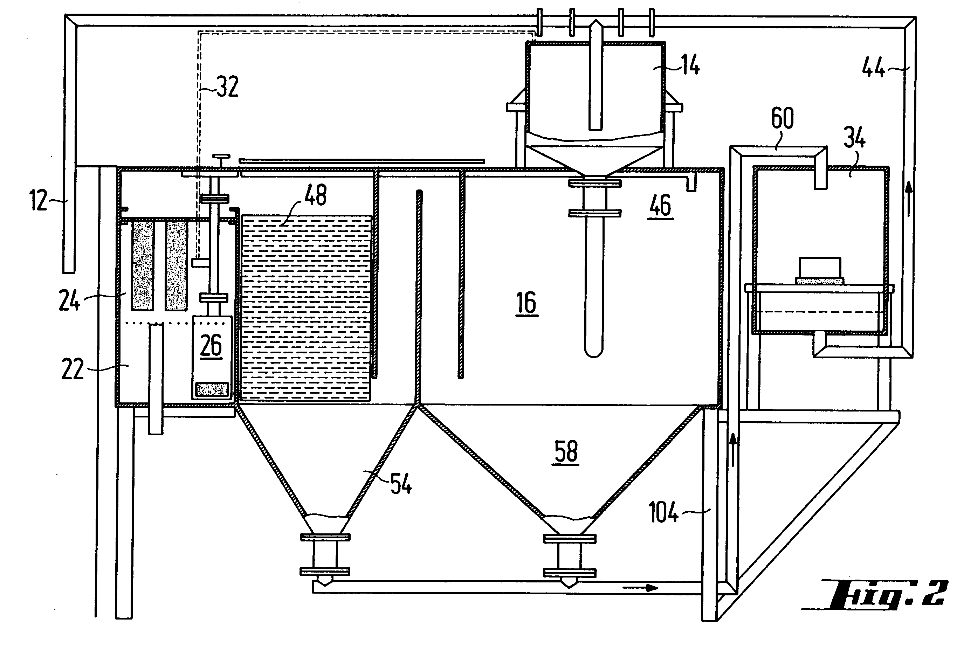

In Fig. 2 ist eine Prinzipdarstellung einer der erfindungsgemäßen Lehre gehorchenden Anordnung zur Wasseraufbereitung, insbesondere zur Abwasserreinigung in Autowaschanlagen dargestellt, die überaus kompakt aufgebaut ist. Dabei sind entsprechend der Fig. 1 gleiche Elemente mit gleichen Bezugszeichen.

Um eine kompakte und leicht handhabbare Einheit zur Verfügung zu stellen, sind der Sammelbehälter (14) und der Schlammbehälter (34) sowie der aus mehreren Abscheiderstufen bestehende Abscheider (16) auf einem Gestell (104) angeordnet.

Abweichend von der Ausführungsform der Fig. 1 geht die den Schlammbehälter (34) absaugende Leitung (44) nicht vom Kopfbereich, sondern vom Bodenbereich des Behälters (34) aus. Im Kopfbereich des Behälters (34) mündet jedoch weiterhin die Leitung (60), die von den Schlamm- bzw. Sandfängen (54) und (58) ausgeht.

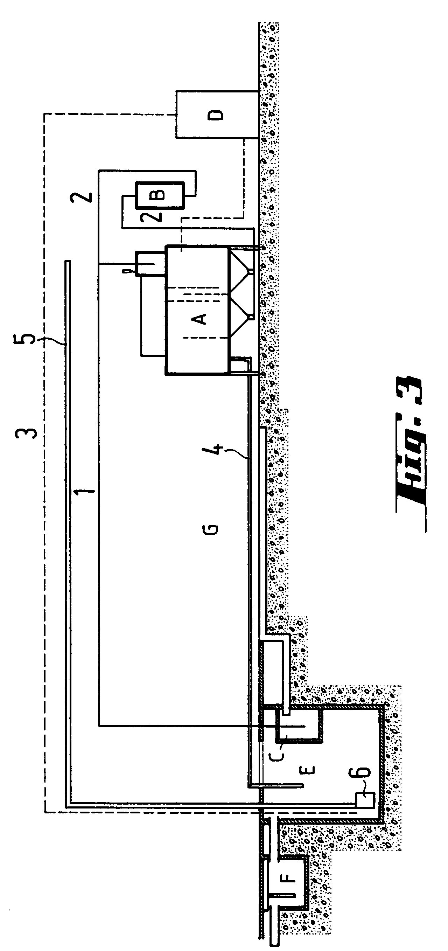

Ein Funktionsschema der nach der Erfindung arbeitenden Anordnung ist der Fig. 3 zu entnehmen, in der mit
- A =: Vakuumerzeuger und Schwerkraftfilter mit Ölabscheider,
- B =: Schlamm- bzw. Sandfilter mit Trockner,
- C =: Waschwassersammelbehälter
- D =: Wasserbehandlungseinrichtung wie Ozongenerator
- E =: waschanlagenseitiger Schlammfang
- F =: Ölabscheider
- G =: waschanlagenseitiger Waschwassereinlauf
bezeichnet sind.

Ferner sind mit (1) die Waschwasseransaugleitung, mit (2) der Schlamm- und Sandabzug und mit (3) Einrichtungen zur Wasserbehandlung wie Ozon-Behandlung gekennzeichnet.

Aus dem Abscheider (A) stammendes gereinigtes Wasser strömt über eine Leitung (4) zu dem vorzugsweise ausgekleideten oder einen Einsatz aufweisenden ursprünglichen Schlammfang (E), von dem mittels z.B. einer Tauchpumpe (6) über eine Druckleitung (5) Wasser einer Waschanlage zugeführt wird.

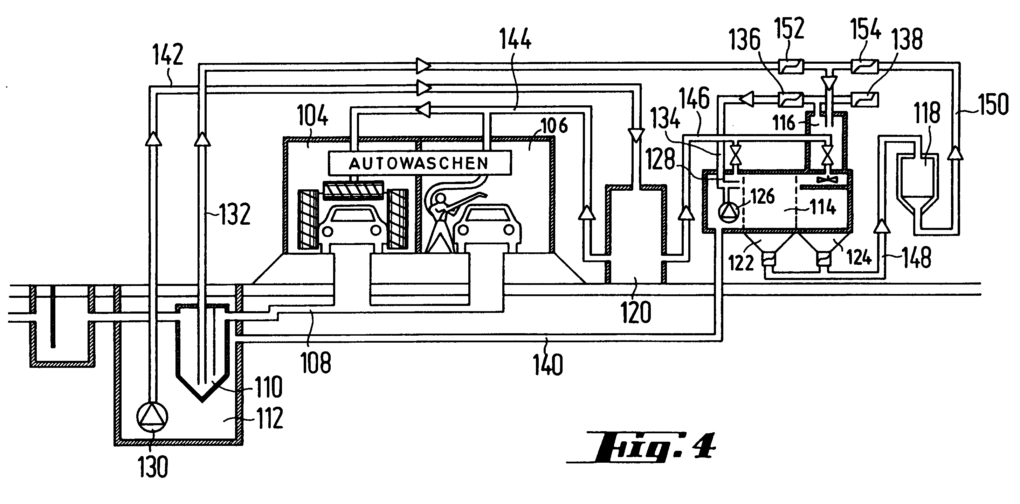

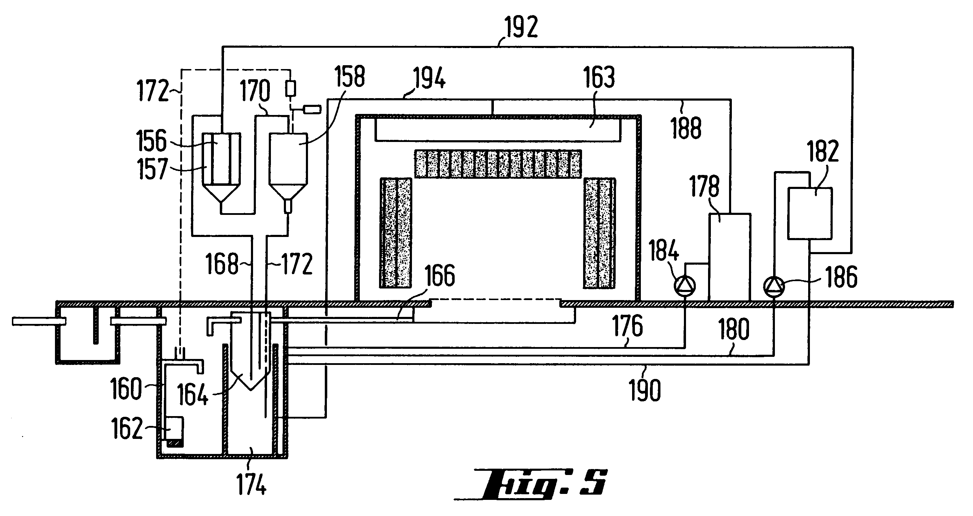

In den Fig. 4 und 5 sind bevorzugte Ausführungsformen von Anordnungen zur Aufbereitung von Waschwasser rein prinzipiell dargestellt.

Abwasser, das z.B. von einer Portalwaschanlage (104) oder von Waschboxen (106) stammt, wird über eine Leitung (108) in einem Waschwassersammelbehälter (110) aufgefangen, der seinerseits in einem Schlammfang (112) angeordnet ist, sofern eine bereits installierte Waschanlage erfindungsgemäß ausgerüstet wird. Andernfalls kann der die Funktion eines Brauchwasserstapelbeckens aufweisende Raum (112) auch durch einen einzubauenden Tank oder ähnliches bereitgestellt werden.

Als weitere wesentliche Bestandteile der erfindungsgemäßen Anordnung nach Fig. 4 ist eine Vorreinigungsstufe (114) zu nennen, die mit einem selbsttätig entleerbaren Sammelbehälter (116) verbunden ist, der dem Sammelbehälter der Fig. 1 und 2 in seiner Funktion entspricht. Auch kann die Vorreinigungsstufe (114) der der Fig. 1 und 2 entsprechen.

Ferner ist ein Schlammauffangbehälter (118) sowie eine Feinfiltrationseinrichtung (120) vorhanden, die auch durch eine Entkeimungseinrichtung wie Ozonstufe ersetzt bzw. ergänzt werden kann.

Die Vorreinigungsstufe (114) weist mehrere nicht näher bezeichnete Stufen auf, durch die unter anderem Kohlenwasserstoffe abgetrennt und angefallener Schlamm in sogenannten Schlammfängen (122), (124) gesammelt wird.

In der Vorreinigungsstufe befindet sich des weiteren eine Tauchpumpe (126), die eine in der Vorreinigungsstufe (114) vorhandene Wasserstrahlpumpe mit dem in der Vorreinigungsstufe vorhandenen vorgereinigten Abwasser versorgt.

Ferner befindet sich eine Tauchpumpe (130) in dem Brauchwasserstapelbecken (112).

Die Funktion der der Fig. 4 zu entnehmenden Anordnung ist nun die folgende.

Das über die Leitung (108) in dem Waschwassersammelbehälter (110) angesammelte Wasser wird über eine Leitung (132) in den Sammelbehälter (116) durch einen Unterdruck gesaugt, der von der Wasserstrahlpumpe (128) erzeugt wird. Hierzu ist die Wasserstrahlpumpe (128) über eine Leitung (134) mit dem Sammelbehälter (116) verbunden. Zum Ansaugen des Abwassers über die Leitung (132) ist der Sammelbehälter (116) bodenseitig verschlossen. Gleichzeitig ist ein in der Leitung (134) vorhandenes Ventil (136) geöffnet.

Sobald der Sammelbehälter (116) gefüllt ist, wird dieser automatisch entleert. Gleichzeitig kann über die Leitung (134) Falschluft angesaugt werden. Hierzu ist das Ventil (136) geschlossen sowie das Ventil (138) geöffnet, über das eine Verbindung zwischen dem Sammelbehälter (116) und der Umgebungsluft erfolgt.

Das die Vorreinigungsstufe durchströmende Abwasser gelangt sodann über eine Leitung (140) in das Brauchwasserstapelbecken (112). Von hier gelangt das vorgereinigte Abwasser mittels der Tauchpumpe (130) über eine Leitung (142) zu der Feinfiltrations-/ Entkeimungsstufe (120), um wahlweise über eine Leitung (144) der Portalwaschanlage (104) bzw. den Waschboxen (106) oder über eine Leitung (146) der Vorreinigungsstufe (114) oder dem Sammelbehälter (116) zugeführt zu werden.

Über eine Leitung (148) sind die Schlammfänge (122) und (124) mit dem Schlammauffangbehälter (118) verbunden, der seinerseits über eine Leitung (150) mit dem Sammelbehälter (116) in Verbindung steht, um entweder Schlamm aus den Schlammfängen (122) und (124) anzusaugen oder bei abgesperrter Leitung (148) den in dem Schlammauffangbehälter (118) angesammelten Schlamm zu trocknen. Sofern über die Leitung (150) in dem Schlammauffangbehälter (118) ein Unterdruck erzeugt werden soll, muß selbstverständlich das Ventil (136) in der Leitung (134) offen sowie das Ventil (152) in der Leitung (132) und das Ventil (138) geschlossen sein, wohingegen ein in der Leitung (150) vorhandenes Ventil (154) geöffnet ist.

Die Anordnung nach der Fig. 5 unterscheidet sich von der der Fig. 4 unter anderem dadurch, daß eine Vorreinigungsstufe (156) einem Sammelbehälter (158) nicht nachgeordnet, sondern vorgeschaltet ist. Unabhängig davon wird jedoch auch bei der Anordnung nach Fig. 5 der von einer Wasserstrahlpumpe (160), die über eine Tauchpumpe (162) betrieben wird, erzeugte Unterdruck dazu benutzt, um das in einem Waschwassersammelbehälter (164) angesammelte Waschwasser abzusaugen, um dieses dann im gewünschten Umfang Reinigungsstufen zuzuführen.

So wird das von einer Portalwaschanlage (163) stammende Abwasser über eine Leitung (166) dem Waschwassersammelbehälter (164) zugeführt, das über eine Leitung (168) in die Vorreinigungsstufe (156) und sodann über eine Leitung (170) zu dem selbsttätig entleerbaren Sammelbehälter (158) gelangt. Hierzu ist der Sammelbehälter (158) über eine Leitung (172) mit der Unterdruckseite der Wasserstrahlpumpe (160) verbunden.

Die Vorreinigungsstufe (156) weist ein vorzugsweise koaxial im Behälter angeordnetes umlaufendes zylindrisches Filter (157) auf, durch das das über die Leitung (168) strömende Abwasser hindurchgesaugt wird, so daß Schmutz, Sand oder sonstiger Schlamm im Inneren verbleibt, wohingegen das vorgereinigte Abwasser über die Leitung (170) zu dem Behälter (158) gesaugt wird.

Von dem Behälter (158), der von der Funktion her dem Sammelbehälter (116) der Fig. 4 bzw. dem Sammelbehälter (14) der Fig. 1 entspricht, strömt das vorgereinigte Abwasser über eine Leitung (172) in ein Stapelbecken (174), in dem auch das Waschwassersammelbecken (164) angeordnet ist.

Von dem Stapelbecken (174) kann das vorgereinigte Wasser über eine Leitung (176) einer Feinfiltration (178) oder über eine Leitung (180) einer sonstigen Entkeimungseinrichtung wie z. B. Ozon-Erzeuger (182) zugeführt werden. Hierzu sind in den Leitungen (176) und (180) Pumpen (184) und (186) angeordnet.

Von der Feinfiltration (178) kann das gereinigte Wasser als Brauchwasser über die Leitung (188) zu der Waschanlage strömen. Von der Entkeimungseinrichtung (182) kann wahlweise Wasser dem Stapelbecken (174) über eine Leitung (190) oder der Vorreinigungsstufe (156) über eine Leitung (192) zugeführt werden.

Sofern das in dem Stapelbecken (174) vorhandene Wasser hinreichend keimfrei ist -dies trifft insbesondere dann zu, wenn über die Leitung (190) von der Entkeimungseinrichtung (182) Wasser in das Stapelbecken (174) zurückgeführt worden ist- kann der Portalwaschanlage (163) über eine Leitung (194) unmittelbar Brauchwasser zugeführt werden.

## Patentansprüche

1. Verfahren zum Reinigen von Abwasser einer Kraftfahrzeug-Waschanlage( 104, 106, 163), wobei das Abwasser einen offenen Kreislauf durchströmt, in dem das Abwasser in einem ersten Behälter (10, 110, 164) und vorgereinigtes bzw. gereinigtes Abwasser in einem zweiten Behälter (22, 112. 174) gesammelt werden, von dem das vorgereinigte bzw. gereinigte Abwasser unmittelbar der Kraftfahrzeug-Waschanlage oder mittelbar über eine Reinigungsstufe der Kraftfahrzeug-Waschanlage zugeführt wird, umfassend die Verfahrensschritte
- Fördern des Abwassers aus dem ersten Behälter in einen dritten Behälter mittels Unterdruck,
- Entleeren des in den dritten Behälter geförderten Abwassers bei Erreichen eines vorgegebenen Füllstandes,
- Zuführung des aus dem dritten Behälter abgegebenen Abwassers mittelbar oder unmitelbar in den zweiten Behälter, wobei das Abwasser entweder vor dem Fördern in den dritten Behälter oder nach dem Entleeren aus diesem durch einen Abscheider (16, 114, 156) fließt,
- Erzeugen des zum Fördern erforderlichen Unterdrucks durch eine Wasserstrahlpumpe (28, 128, 160), als dessen Wasservorlage gereinigtes oder vorgereinigtes Abwasser des Kreislaufs verwendet wird.

2. Verfahren nach Anspruch 1,
**dadurch gekennzeichnet,**
daß aus dem Kreislauf abgeschiedene Feststoffe mittels des von der Wasserstrahlpumpe (28, 128, 160) erzeugten Unterdrucks abgesaugt wird.

3. Verfahren nach Anspruch 1 oder 2,
**dadurch gekennzeichnet,**
daß das in dem zweiten Behälter (22, 112, 174) angesammelte gereinigte bzw. vorgereinigte Abwasser mittels z. B. eines Ozonerzeugers (182) entkeimt und als Brauchwasser verwendet wird.

4. Anordnung zum Reinigen von Abwasser aus Kraftfahrzeug-Waschanlagen (104, 106, 163), umfassend einen das Abwasser aufnehmenden ersten Behälter (10, 110, 164), zumindest einen gereinigtes bzw. vorgereinigtes Abwasser aufnehmenden zweiten Behälter (22, 112, 174), einen vom Abwasser durchströmten Abscheider (16, 114, 156) sowie ein Förderaggregat zum Fördern des Abwassers, wobei das in dem zweiten Behälter angesammelte gereinigte bzw. vorgereinigte Abwasser der Kraftfahrzeug-Waschanlage wieder zuführbar ist,
**dadurch gekennzeichnet,**
daß das Förderaggregat eine Unterdruck erzeugende Wasserstrahlpumpe (28, 128, 160) ist, die in dem zweiten gereinigtes bzw. vorgereinigtes Abwasser aufweisenden Behälter (22, 112, 174) oder einem weiteren Behälter (114) angeordnet ist, daß der erste Behälter (10, 110, 164) über eine absperrbare erste Leitung (12, 132, 168, 170) mit einem durch den von der Wasserstrahlpumpe erzeugten Unterdruck befüllbaren und bei Erreichen einer vorgebbaren Füllmenge entleerbaren dritten Behälter (14, 116, 158) verbunden ist, der seinerseits mittelbar oder unmittelbar mit dem zweiten Behälter (22, 120, 174) in Verbindung steht, daß die Wasserstrahlpumpe mit deren Saugseite (30) mit dem dritten Behälter über eine absperrbare zweite Leitung (32, 134, 172) verbunden ist und daß dem dritten Behälter der Abscheider (16, 114, 156) vor- oder nachgeschaltet ist.

5. Anordnung nach Anspruch 4,
**dadurch gekennzeichnet,**
daß dem dritten Behälter (158) eine Vorfilterstufe (156) vorgeschaltet ist, daß die Vorfilterstufe (156) ein in einem Behälter angeordnetes umlaufendes, einen Innenraum umgebendes Filter (157) aufweist, daß in dem Innenraum eine Abwasser zuführende Leitung (192) mündet und daß zwischen Behälterwandung und Filteraußenseite verlaufender Raum über den dritten Behälter (158) an die Saugseite der Wasserstrahlpumpe (160) angeschlossen ist.

6. Anordnung nach Anspruch 4 oder 5,
**dadurch gekennzeichnet,**
daß in der gereinigtes Abwasser zu der Kraftfahrzeug-Waschanlage (104, 106, 163) führende Leitung eine Feinfiltration (120, 178) und/oder eine Ozon-Einrichtung (182) geschaltet ist.

7. Anordnung nach zumindest Anspruch 4,
**dadurch gekennzeichnet,**
daß von einem Schlamm aufnehmenden Schlammbehälter (34, 118, 156) eine absperrbare dritte Leitung (44, 150, 170) ausgeht, die direkt oder indirekt in dem dritten Behälter (14, 116, 158) mündet.

8. Anordnung nach zumindest einem der vorhergehenden Ansprüchen,
**dadurch gekennzeichnet,**
daß der Abscheider (16, 114) mehrstufig ausgebildet ist, wobei eine vorzugsweise erste Stufe (46) ein Ölabscheider und eine weitere Stufe (48) eine Filterstufe sind.

9. Anordnung nach zumindest einem der vorhergehenden Ansprüche,
**dadurch gekennzeichnet,**
daß der Abscheider (16, 114) zumindest einen Schlammfang (54, 56, 58, 122, 124) aufweist, der über eine absperrbare vierte Leitung (60, 148) mit dem Schlammbehälter (34, 118) verbunden ist.

10. Anordnung nach zumindest einem der vorhergehenden Ansprüche,
**dadurch gekennzeichnet,**
daß der Schlammbehälter (34, 118) evakuierbar ist und vorzugsweise eine Heizung aufweist.

11. Anordnung nach zumindest einem der vorhergehenden Ansprüche,
**dadurch gekennzeichnet,**
daß von dem gereinigtes oder vorgereinigtes Abwasser aufnehmenden zweiten Behälter (112, 174) oder einem diesem nachgeschalteten Auffangbehälter (40) oder einem mit dem dritten Behälter (116) verbundenen weiteren Behälter (114) eine zu einer Entkeimungseinrichtung (100, 120, 182) führende Leitung ausgeht und daß die Entkeimungseinrichtung (100, 120, 182) über Leitungen mit dem Schlammbehälter (34, 182) und/oder dem Abscheider (16, 114) und/oder der Nachreinigungsstufe (24) und/oder einer Vorreinigungsstufe (156) verbunden ist.

12. Anordnung nach zumindest einem der vorhergehenden Ansprüche,
**dadurch gekennzeichnet,**
daß von dem Auffangbehälter (40) oder dem gereinigtes bzw. vorgereinigtes Abwasser aufnehmenden zweiten Behälter (112, 174) oder einer Feinfiltrationsstufe (120, 178) eine zu der Kraftfahrzeug-Waschanlage führende Leitung (144, 188) ausgeht.

13. Anordnung nach zumindest einem der vorhergehenden Ansprüche,
**dadurch gekennzeichnet,**
daß dem zweiten oder dritten Behälter (22, 112, 158) eine Reinigungsstufe (16, 114, 156) vorgeschaltet ist.

14. Anordnung nach zumindest einem der vorhergehenden Ansprüche,
**dadurch gekennzeichnet,**
daß die Reinigungsstufe (24) eine Mikro-/Feinfiltrations- und/oder Entkeimungsstufe ist.

## Claims

1. A process for purifying waste water from a motor vehicle washing installation (104, 106, 163), said waste water is flowing through an open circuit in which said waste water is collected in a first container (10, 110, 164) and pre-purified or purified waste water is collected in a second container (22, 112, 174) from which the pre-purified or purified waste water is supplied to the motor vehicle washing installation directly or indirectly via a purifying stage, comprising the process steps:
- Supplying the waste water from the first container to a third container by negative pressure,
- Emptying the waste water supplied to the third container when a given filling level is reached,
- Delivering the waste water supplied from the third container directly or indirectly to the second container, where the waste water is flowing through a separator (16, 114, 156) either before it is supplied to the third container or after having been emptied,
- Generating the negative pressure necessary for supply by a water jet pump (28, 128, 160), water seal of which is purified or pre-purified waste water of the circuit.

2. A process according to Claim 1,
**characterized in that**
the solids separated from said circuit are drawn off by the negative pressure generated by said water jet pump (28, 128, 160).

3. A process according to Claim 1 or 2,
**characterized in that**
the purified or pre-purified waste water collected in the second container (22, 112, 174) is degermed, for example by an ozone generator (182) and used as service water.

4. A system for purifying waste water from motor vehicle washing installations (104, 106, 163), comprising a first container (10, 110, 164) receiving said waste water, at least one second container (22, 112, 174) receiving pre-purified or purified waste water, a separator (16, 114, 156) through which the waste water flows as well as a supplying unit for supplying the waste water, wherein the purified or pre-purified waste water collected in the second container can be returned to the motor vehicle washing installation,
**characterized in that**
said supplying unit is a water jet pump (28, 128, 160) generating negative presssure, which is arranged in the second container (22, 112, 174) having purified or pre-purified waste water or in a further container (114), said first container (10, 110, 164) is connected via a first line (12, 132, 168, 170) adapted to be shut off to a third container (14, 116, 158) that can be filled under negative pressure and emptied when a predetermined filling level is reached, and said third container in turn is connected directly or indirectly to said second container (22, 112, 174), the suction side (30) of the water jet pump is connected to the third container via a second line (32, 134, 172) adapted to be shut off, and a separator (16, 114, 156) is connected upstream or downstream of said third container.

5. A system according to Claim 4,
**characterized in that**
a pre-filter stage (156) is upstream of said third container (158), said pre-filter stage (156) having an all-round filter (157) disposed in the container and surrounding an internal area, and a line (192) supplying waste water opens into the internal area, and an area between the container wall and filter exterior is connected to the suction side of the water jet pump (160) via the third container (158).

6. A system according to Claim 4 or 5,
**characterized in that**
a fine filtration stage (120, 178) and/or an ozone unit (182) is connected to the line supplying purified waste water to the motor vehicle washing installation.

7. A system according to at least Claim 4,
**characterized in that**
a third line (44, 150, 170) adapted to be shut off extends from a sludge container (34, 18, 156) collecting the sludge, said third line adapted to be shut off is flowing directly or indirectly into the third container (14, 116, 158).

8. A system according to at least one of the preceding claims,
**characterized in that**
said separator (16, 114) is of multi-stage design, with a preferably first stage (46) being an oil separator and a further stage (48) a filter stage.

9. A system according to at least one of the preceding claims,
**characterized in that**
said separator (16, 114) has at least one sludge trap (54, 56, 58, 122, 124) that is connected via a fourth line (60, 148) adapted to be shut off to said sludge container (34, 118).

10. A system according to at least one of the preceding claims,
**characterized in that**
said sludge container (34, 118) is adapted to be evacuated and preferably has a heater.

11. A system according to at least one of the preceding claims,
**characterized in that**
a line leading to a degerming unit (100, 120, 182) extends from said second container (112, 174) receiving purified or pre-purified waste water or from a receiving container (40) downstream said second container, or from a further container (114) connected to the third container (116) , and the degerming unit (100, 120, 182) is connected via lines to the sludge container (34, 182) and/or the separator (16, 114) and/or the post-purification stage (24) and/or a pre-purification stage (156).

12. A system according to at least one of the preceding claims,
**characterized in that**
a line (144, 188) leading to the motor vehicle installation extends from said receiving container (40) or from said second container (112, 174) receiving said purified or pre-purified waste water or from a fine filtration stage (120, 178).

13. A system according to at least one of the preceding claims,
**characterized in that**
a purification stage (16, 114, 156) is upstream of said second or said container (22, 112, 158).

14. A system according to at least one of the preceding claims,
**characterized in that**
said purification stage (24) is a micro/fine filtration stage and/or a degerming stage.

## Revendications

1. Procédé d'épuration des eaux usées d'une installation de lavage de véhicules (104, 106, 163), dans lequel les eaux usées parcourent un circuit ouvert dans lequel les eaux usées sont collectées dans une première cuve (10, 110, 164) et les eaux usées pré-épurées ou épurées dans une deuxième cuve (22, 112, 174) de laquelle les eaux pré-épurées ou épurées sont amenées à l'installation de lavage de véhicules, directement ou indirectement par l'intermédiaire d'un étage d'épuration de l'installation de lavage de véhicules, comportant les étapes consistant à:
- transporter à l'aide d'une dépression les eaux usées d'une première cuve jusque dans une troisième cuve,
- lorsqu'un niveau prédéterminé est atteint, vider les eaux usées transportées dans la troisième cuve,
- transférer directement ou indirectement les eaux usées délivrées par la troisième cuve dans la deuxième cuve, les eaux usées traversant un séparateur (16, 114, 156) soit avant le transport dans la troisième cuve ou après avoir été extraites de cette dernière,
- créer la dépression nécessaire pour leur transport par une trompe à eau (28, 128, 160) qui utilise comme alimentation en eau de l'eau usée épurée ou pré-épurée du circuit.

2. Procédé selon la revendication 1, caractérisé en ce que les solides extraits du circuit sont aspirés à l'aide de la dépression créée par la trompe à eau (28, 128, 160).

3. Procédé selon les revendications 1 ou 2, caractérisé en ce que les eaux usées épurées ou pré-épurées recueillies dans la deuxième cuve (22, 112, 174) sont utilisées après avoir été débarrassés de leurs germes à l'aide par exemple d'un ozoniseur (182), ou telles quelles.

4. Dispositif pour le nettoyage d'eau usées d'une installation de lavage de véhicules (104, 106, 163) comportant une première cuve (10, 110, 164) reprenant les eaux usées, au moins une deuxième cuve (22, 112, 174) reprenant les eaux usées épurées ou pré-épurées, un séparateur (16, 114, 156) traversé par les eaux usées ainsi qu'une installation de transport pour le transport des eaux usées, où les eaux usées épurées ou pré-épurées recueillies dans la deuxième cuve pouvant être ramenées dans l'installation de lavage de véhicules,
caractérisé en ce que l'installation de transport est une trompe à eau (28, 128, 160) créant une dépression, qui est disposée dans la deuxième cuve (22, 112, 174) reprenant les eaux usées épurées ou pré-épurées ou dans une autre cuve (114), en ce que la première cuve (10, 110, 164) est reliée par une première conduite (12, 132, 168, 170) qui peut être fermée à une troisième cuve (14, 116, 158) qui peut être remplie grâce à la dépression créée par la trompe à eau et qui peut être vidée lorsqu'elle contient une quantité prédéterminée, et qui pour sa part est en communication indirecte ou directe avec la deuxième cuve (22, 120, 174), en ce que le côté aspiration (30) de la trompe à eau est relié à la troisième cuve par une deuxième conduite (32, 134, 172) qui peut être fermée, et en ce que le séparateur (16, 114, 156) est installé en amont ou en aval de la troisième cuve.

5. Dispositif selon la revendication 4, caractérisé en ce qu'un étage de pré-filtration (156) est installé en amont de la troisième cuve (158), en ce que l'étage de pré-filtration (156) présente un filtre périphérique (157) disposé dans une cuve, entourant un espace intérieur, en ce qu'une conduite (192) amenant les eaux usées débouche dans l'espace intérieur et en ce qu'un espace s'étendant entre la paroi de la cuve et le côté externe du filtre est raccordé au côté aspiration de la trompe à eau (160) par l'intermédiaire de la troisième cuve (158).

6. Dispositif selon les revendications 4 ou 5, caractérisé en ce qu'une filtration fine (120, 178) et/ou un dispositif à ozone (182) est installé dans la conduite conduisant les eaux usées épurées vers l'installation de lavage de véhicules (104, 106, 163).

7. Dispositif selon au moins la revendication 4, caractérisé en ce que d'une cuve à boues (34, 118, 156) reprenant les boues part une troisième conduite (44, 150, 170) qui peut être fermée, qui débouche directement ou indirectement dans la troisième cuve (14, 116, 158).

8. Dispositif selon au moins l'une des revendications précédentes, caractérisé en ce que le séparateur (16, 114) est à plusieurs étages, un premier étage (46) étant de préférence un séparateur d'huile et un autre étage (48) un étage de filtration.

9. Dispositif selon au moins l'une des revendications précédentes, caractérisé en ce que le séparateur (16, 114) présente au moins un piège à boues (54, 58, 58, 122, 124) qui est relié à la cuve à boues (34, 118) par une quatrième conduite (60, 148) qui peut être fermée.

10. Dispositif selon au moins l'une des revendications précédentes, caractérisé en ce que la cuve à boues (34, 118) peut être placée sous vide et présente de préférence un dispositif de chauffage.

11. Dispositif selon au moins l'une des revendications précédentes, caractérisé en ce que de la cuve (112, 174) reprenant les eaux épurées ou pré-épurées, ou d'une cuve de reprise (40) installée en aval de la première, ou d'une autre cuve (114) reliée à la troisième cuve (116) part une conduite conduisant au dispositif d'élimination des germes (100, 120, 182), et en ce que le dispositif d'élimination des germes (100, 120, 182) est relié par des conduites à la cuve à boues (34, 182) et/ou au séparateur (16, 114) et/ou à l'étage de post-épuration (24) et/ou à un étage de pré-épuration (156).

12. Dispositif selon au moins l'une des revendications précédentes, caractérisé en ce qu'une conduite (144, 188) conduisant à l'installation de lavage de véhicules part de la cuve de reprise (40) ou de la deuxième cuve (112, 174) reprenant les eaux usées épurées ou pré-épurées, ou d'un étage de filtration fine (120, 178).

13. Dispositif selon au moins l'une des revendications précédentes, caractérisé en ce qu'en amont de la deuxième ou de la troisième cuve (22, 112, 158) est raccordé un étage d'épuration (16, 114, 156).

14. Dispositif selon au moins l'une des revendications précédentes, caractérisé en ce que l'étage d'épuration (24) est un étage de microfiltration ou de filtration fine et/ou d'élimination des germes.
